# EUROPÄISCHE PATENTSCHRIFT

(11) **EP 0 609 705 B1**
(45) Veröffentlichungstag und Bekanntmachung des Hinweises auf die Patenterteilung: **17.04.1996**
(21) Anmeldenummer: 94100741.1
(22) Anmeldetag: 19.01.1994
(51) Int. Cl.: B60K 7/00

(54) **Elektromotorischer Direktantrieb**
Direct drive electric motor
Entraînement direct par moteur électrique

(30) Priorität: 03.02.1993 DE 4303069
(43) Veröffentlichungstag der Anmeldung: 10.08.1994
(73) Patentinhaber: SIEMENS AKTIENGESELLSCHAFT, D-80333 München (DE)
(72) Erfinder: Kempkes, Joachim, Dr.-Ing., D-90459 Nürnberg (DE); Pfannschmidt, Bernd, Dipl.-Ing. FH, D-90574 Rosstal (DE)

(56) Entgegenhaltungen:
- EP-A- 0 337 032
- EP-A- 0 413 337
- EP-A- 0 464 929
- WO-A-92/18344
- DE-A- 3 323 686
- DE-A- 3 817 537
- DE-C- 3 538 513

## Beschreibung

Die Erfindung betrifft ein lenkbares Einzelrad mit einem elektromotorischen Direktantrieb.

Ein lenkbares Einzelrad gemaß Oberbegriff des Anspruchs 1 ist in der EP-A-0 337 032 beschrieben. Im bekannten Fall ist mittels Schrauben eine Radnabe am Fahrwerk befestigt. An dieser Radnabe ist ein Ständer durch Schrauben drehfest gehalten. Der Rotor ist mit Schrauben an einer Radscheibe befestigt, wobei die Radscheibe über Lager auf der Radnabe gelagert ist.

Aus der WO-A-92 18344 ist ein Elektromotor für ein Elektromobil zum Einbau in eine Radfelge als Außenläufer bekannt, wobei der Rotorrückschluß in die Felge integriert ist. Die Lagerung des gesamten Motors erfolgt durch in den Felgenhörnern angeordnete Rollenlager, wobei der das Laufrad tragende Rotor einerseits gegenüber dem Ständerblechpaket und andererseits gegenüber der Radfelge gelagert ist.

Durch die EP-A-0 413 337 ist weiterhin ein elektromotorischer Direktantrieb für Schienenfahrzeuge bekannt, bei dem axial neben einem anzutreibenden Fahrzeugrad ein elektronisch kommutierter, gehäuseloser Elektromotor angeordnet ist. Der Elektromotor ist mit seinem Außenläufer ohne Zwischenschaltung eines Getriebes an der Achswelle des anzutreibenden Fahrzeugrades oder direkt am Fahrzeugrad befestigt. Die Achswelle des Fahrzeugrades ist an ihren beiden überstehenden Enden im Fahrgestell drehbar gelagert. Der Ständer ist durch seine Befestigung am Fahrwerk verdrehsicher gehaltert. Aufgrund des konstruktiven Aufbaus finden sich Bauteiltoleranzen und Exzentrizitäten als Koaxialfehler zwischen Ständer und Läufer im Luftspalt des Motors wieder. Dies kann zu ungünstigen elektrischen Eigenschaften des Motors führen. Eine Lenkbarkeit des einzelnen Fahrzeugrades ist nicht gegeben, da die Achswelle relativ zum Fahrgestell nicht horizontal schwenkbar ist. Der bekannte Direktantrieb ist darüber hinaus axial relativ breit, so daß die angetriebenen Fahrzeugräder einen entsprechend breiten Radkasten benötigen. Dadurch ist insbesondere bei Niederflur-Schienenfahrzeugen der Fahrgastraum im Bereich dieser Radkästen verengt.

In der DE-C-35 38 513 ist ferner ein elektromotorischer Radnabenantrieb für Schienenfahrzeuge beschrieben, bei dem der Radträger vom Ständergehäuseteil des Elektromotors gebildet wird. Die Rotorwelle des Elektromotors ist koaxial zum Einzelrad drehbar gelagert und axial außen über ein Planetengetriebe in Mitnahmeverbindung mit dem Einzelrad gestellt. Bei dem bekannten Radnabenantrieb werden die Radlager des anzutreibenden Einzelrades zusätzlich durch das Gewicht des Elektromotors und der Bremsscheibe belastet. Aufgrund seiner Kompaktheit benötigt der bekannte Radnabenantrieb nur kleine Radkästen, so daß bei Niederflur-Schienenfahrzeugen ein durchgehend niedriger Wagenboden realisiert werden kann. Der Radnabenantrieb gemäß der DE-C-35 38 513, der auch bei lenkbaren Einzelrädern eingesetzt werden kann, erfordert wegen seines Getriebes jedoch Abdichtungsmaßnahmen sowie regelmäßigen Ölwechsel.

Aufgabe der vorliegenden Erfindung ist es, ein lenkbares Einzelrad mit einem kompakten, wartungsfreundlichen und konstruktiv einfachen Direktantrieb zu schaffen.

Die Aufgabe wird erfindungsgemäß durch die im kennzeichnenden Teil des Anspruchs 1 angegebenen Merkmale gelöst. Vorteilhafte Ausgestaltungen der Erfindung sind in den Ansprüchen 2 bis 7 angegeben. Ein bevorzugter Anwendungsfall ist im Anspruch 8 beschrieben.

Der Direktantrieb des erfindungsgemäßen Einzelrades ist als Außenläufermotor ausgebildet, der axial neben dem anzutreibenden, auf einem zumindest horizontal schwenkbaren Radträger gelagerten Einzelrad angeordnet ist. Der Außenläufer des Außenläufermotors ist direkt, z.B. mittels Bolzen, mit dem Einzelrad verbunden, wohingegen das Ständerblechpaket derart verdrehsicher gehaltert ist, daß von diesem die Schwenkbewegung des Radträgers mit ausgeführt wird. Der Träger für das Ständerblechpaket ist im Außenläufer des Motors gelagert, wodurch auf konstruktiv einfache Weise sichergestellt ist, daß der Ständer und der Außenläufer zueinander koaxial angeordnet sind, wodurch sich ein konstanter Luftspalt zwischen Ständer und Außenläufer ergibt.

Bei dem elektromotorischen Direktantrieb des Einzelrades gemäß Anspruch 1 ist also der Außenläufer ohne Zwischenschaltung eines Getriebes und damit konstruktiv besonders einfach mit dem Einzelrad verbunden. Durch die direkte Verbindung des Außenläufers mit dem Einzelrad sowie durch die außerhalb des Außenläufers abstützungsfreie, ausschließlich verdrehsichere Halterung des Ständerblechpakets ist sichergestellt, daß das Gewicht des Außenläufermotors nur über die Verbindungsstelle zwischen Außenläufer und Einzelrad direkt auf dieses übertragen wird. Dadurch, daß das Gewicht des Außenläufermotors über das angetriebene Einzelrad direkt auf die Schiene übertragen wird, werden die Radlager nicht zusätzlich durch das Gewicht des Außenläufermotors belastet. Durch die Entlastung der Radlagerung wird in vorteilhafter Weise der Verschleiß der betreffenden Teile entsprechend verringert.

Ferner wird bei dem elektromotorischen Direktantrieb des Einzelrads durch die Verwendung einer Drehmomentabstützung eine verdrehsichere Halterung des Ständerblechpakets erreicht, die konstruktiv besonders einfach ist. Der Begriff Fahrwerk umfaßt hierbei nicht nur Fahrwerksholme und Fahrwerksschwingen bzw. Drehgestellschwingen, sondern auch Aufnahmepunkte in der Fahrzeugkarosserie, z.B. im Wagenkasten oder im Radkasten.

Bei erfindungsgemäßem Direktantrieb läuft die Bremsscheibe immer mit der Raddrehzahl. Gegenüber einer Bremsscheibe, die aufgrund einer Getriebeübersetzung mit einer gegenüber der Raddrehzahl höheren Drehzahl läuft, treten wesentlich geringere Unwuchten auf. Darüber hinaus wird das Gewicht der Bremsscheibe und des Verbindungselementes über den Außenläufer direkt auf das angetriebene Einzelrad und von diesem direkt auf die Schiene übertragen. Damit werden auch die Radlager nicht zusätzlich durch das Gewicht der Bremsscheibe belastet.

Eine Ausgestaltung erlaubt es, auch bei Schienenfahrzeugen mit relativ geringer Spurweite, z.B. 1 m, ein Niederflur-Fahrzeug mit einer relativ großen Durchgangsbreite im Bereich der Radkästen zu schaffen. Trotz der außenseitigen Befestigung des Außenläufermotors am Einzelrad ist ein derartiger Direktantrieb noch innerhalb der äußeren Fahrzeugkontur angeordnet.

Unabhängig von einer innenseitigen oder außenseitigen Befestigung des Außenläufermotors am Einzelrad, kann dieser entweder als umrichtergespeister Asynchronmotor oder als Synchronmotor ausgeführt sein.

Weitere vorteilhafte Ausgestaltungen der Erfindung werden im folgenden anhand von zwei schematisch dargestellten und in Anspruch 8 als bevorzugten Anwendungsfall angegebenen Ausführungsbeispielen in der Zeichnung näher erläutert. Es zeigen:
- FIG 1: ein erstes Ausführungsbeispiel des erfindungsgemäßen Einzelrades mit einem innenseitig angeordneten Außenläufermotor,
- FIG 2: ein zweites Ausführungsbeispiel des erfindungsgemäßen Einzelrades mit einem außenseitig angeordneten Außenläufermotor.

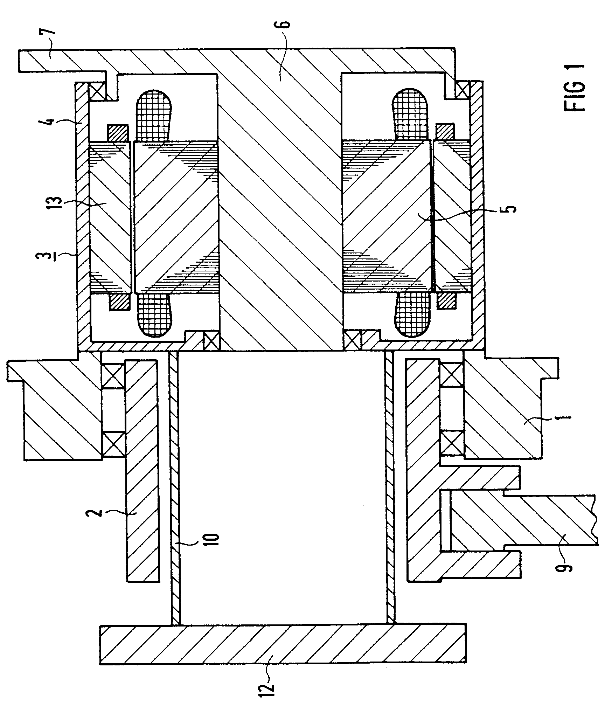

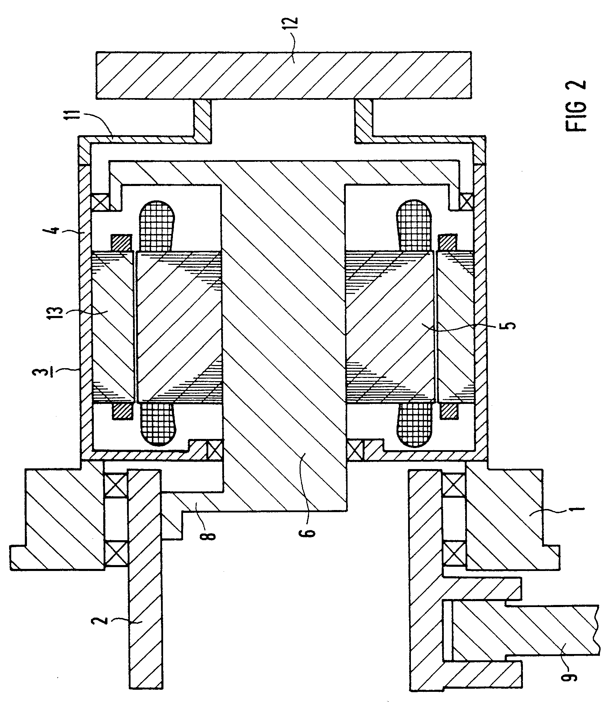

In den FIG 1 und 2 ist mit 1 ein Einzelrad eines Schienenfahrzeugs bezeichnet. Das Einzelrad 1 ist durch seine Lagerung auf einem zumindest horizontal schwenkbaren Radträger 2 lenkbar.

Axial neben dem lenkbaren Einzelrad 1 ist ein Außenläufermotor 3 mit einem Außenläufer 4 und einem Ständerblechpaket 5 angeordnet. Der Außenläufer 4 ist direkt, also ohne Zwischenschaltung eines Getriebes, mit dem Einzelrad 1 verbunden. Das Ständerblechpaket 5 ist drehfest angeordnet. In den in FIG 1 und 2 gezeigten Ausführungsbeispielen sitzt das Ständerblechpaket 5 hierzu auf einem Träger 6, der über eine Drehmomentabstutzung 7 (FIG 1) bzw. eine Drehmomentabstützung 8 (FIG 2) verdrehsicher am Fahrwerk oder am Fahrzeug (FIG 1) bzw. am Radträger (FIG 2) befestigt ist.

Durch die Drehmomentabstützung 7 bzw.8 ist das Ständerblechpaket 5 zwar drehfest gehalten, aber zusammen mit dem Radträger 2 schwenkbar. Die hierfür erforderliche bewegliche Halterung der Drehmomentabstützung 7 am Fahrwerk bzw. am Fahrzeug kann z.B. durch ein in FIG 1 nicht dargestelltes Kugelgelenk erreicht werden. Bei der Ausführungsform gemäß FIG 2 ist eine Halterung der Drehmomentabstützung 8 mittels Kugelgelenk nicht erforderlich, da die Drehmomentabstützung 8 im Radträger 2 gehalten ist. Es versteht sich in diesem Zusammenhang von selbst, daß zur Vermeidung von Zwangskräften sowohl die Drehmomentabstützung 7 als auch die Drehmomentabstützung 8 flexibel befestigt sein müssen.

Das horizontale Schwenken des Radträgers 2 relativ zum Fahrwerk bzw. Fahrzeug wird über eine Halterung 9 veranlaßt. Die Halterung 9 ermöglicht auch ein vertikales Einfedern des Radträgers 2 und damit des Einzelrades 1 mit seinem Außenläufermotor 3.

An dem Außenläufer 4 ist über ein Verbindungselement 10 (FIG 1) bzw. 11 (FIG 2) eine Bremsscheibe 12 befestigt. Die Bremsscheibe 12 rotiert damit in vorteilhafter Weise immer mit der Raddrehzahl.

Bei dem in den FIG 1 und 2 dargestellten Ausführungsbeispielen ist der Außenläufermotor 3 als umrichtergespeister Asynchronmotor ausgeführt, dessen Außenläufer 4 ein Rotorblechpaket 13 aufweist; der Außenläufermotor 3 kann jedoch auch als Synchronmotor ausgeführt sein, dessen Außenläufer ringförmig verteilte Permanentmagnete aufweist.

Die beiden Ausführungsformen in den FIG 1 und 2 unterscheiden sich dadurch, daß bei dem Direktantrieb gemäß FIG 1 die Bremsscheibe 12 radträgerseitig am Außenläufer 4 angeordnet ist, wohingegen bei dem Direktantrieb in FIG 2 die Bremsscheibe 12 an der dem Einzelrad 1 abgewandten Seite angeordnet ist. Die Drehmomentabstützung 7 bzw.8 ist jeweils an der Seite des Außenläufermotors 3 angeordnet, die der Bremsscheibe 12 gegenüberliegt. Außerdem ist bei dem Ausführungsbeispiel in FIG 2 das Einzelrad 1 gegenüber dem Ausführungsbeispiel nach FIG 1 um 180° gedreht. In beiden Fällen ist die Bremsscheibe 12 also an der Fahrzeugaußenseite angeordnet.

Der Direktantrieb gemäß FIG 2 erlaubt es, auch bei Schienenfahrzeugen mit relativ geringer Spurweite, z.B. 1 m, ein Niederflur-Fahrzeug mit einer relativ großen Durchgangsbreite im Bereich der Radkästen zu schaffen.

Es versteht sich in diesem Zusammenhang von selbst, daß die Erfindung nicht auf Schienenfahrzeuge beschränkt ist; vielmehr ist der erfindungsgemäße Direktantrieb z.B. auch bei Straßenfahrzeugen einsetzbar.

## Patentansprüche

1. Lenkbares Einzelrad (1) mit einem elektromotorischen Direktantrieb, wobei das Einzelrad (1) auf einem wenigstens horizontal schwenkbaren Radträger (2) gelagert ist und wobei als Direktantrieb ein axial neben dem Einzelrad (1) angeordneter Außenläufermotor (3) vorgesehen ist, dessen Ständerblechpaket (5) drehfest und mit dem Radträger (2) schwenkbar angeordnet und dessen Außenläufer (4) direkt mit dem Einzelrad (1) verbunden ist,
**dadurch gekennzeichnet,**
daß der das Ständerblechpaket (5) tragende Träger (6) im Außenläufer (3) gelagert ist, daß zur verdrehsicheren Halterung des Ständerblechpakets (5) eine Drehmomentabstützung (7, 8) vorgesehen ist, die mit ihrer einen Seite am Ständerblechpaket (5) und mit ihrer anderen Seite am Fahrwerk, am Fahrzeug oder am Radträger (2) befestigt ist und daß am Außenläufer (4) mittels eines Verbindungselements (10, 11) eine Bremsscheibe (12) starr befestigt ist.

2. Lenkbares Einzelrad nach Anspruch 1,
**dadurch gekennzeichnet**,
daß die Drehmomentabstützung (7) über ein Kugelgelenk am Fahrwerk oder am Fahrzeug befestigt ist.

3. Lenkbares Einzelrad nach Anspruch 1,
**dadurch gekennzeichnet**,
daß das Verbindungselement (10) an der dem Einzelrad (1) zugewandten Seite des Außenläufers (4) angeordnet ist.

4. Lenkbares Einzelrad nach Anspruch 1 und 3,
**dadurch gekennzeichnet**,
daß das Verbindungselement (10) durch den Radträger (2) hindurchgeführt ist und daß an seinem axial außenliegenden Ende die Bremsscheibe (12) angeordnet ist.

5. Lenkbares Einzelrad nach Anspruch 1,
**dadurch gekennzeichnet**,
daß das Verbindungselement (11) an der dem Einzelrad (1) abgewandten Seite des Außenläufers (4) angeordnet ist.

6. Lenkbares Einzelrad nach einem der Ansprüche 1-5,
**dadurch gekennzeichnet**,
daß der Außenläufermotor (3) als umrichtergespeister Asynchronmotor ausgeführt ist, dessen Außenläufer (4) ein Rotorblechpaket aufweist.

7. Lenkbares Einzelrad nach einem der Ansprüche 1-5,
**dadurch gekennzeichnet**,
daß der Außenläufermotor (3) als Synchronmotor ausgeführt ist, dessen Außenläufer ringförmig verteilte Permanentmagnete aufweist.

8. Schienenfahrzeug, **gekennzeichnet** durch lenkbare Einzelräder (1) nach einem der Ansprüche 1-7.

## Claims

1. Controllable single wheel (1) having an electromotive direct drive, whereby the single wheel (1) is mounted on an at least horizontally rotatable wheel support (2) and whereby there is provided as direct drive an external rotor motor (3) arranged axially next to the single wheel (1), the laminated stator core (5) of which external rotor motor (3) is arranged so that it is rotationally secure and can be pivoted with the wheel support (2), and the external rotor (4) of which external rotor motor (3) is connected directly to the single wheel (1), characterized in that the support (6) supporting the laminated stator core (5) is mounted in the external rotor (3), in that there is provided for the rotationally secure supporting of the laminated stator core (5) a torque support (7, 8), which is fastened at its one side to the laminated stator core (5) and at its other side to the chassis, to the vehicle or to the wheel support (2) and in that a brake disc (12) is rigidly fastened to the external rotor (4) by means of a connection element (10, 11).

2. Controllable single wheel according to claim 1, characterized in that the torque support (7) is fastened to the chassis or to the vehicle by way of a spherical joint.

3. Controllable single wheel according to claim 1, characterized in that the connection element (10) is arranged at the side of the external rotor (4) facing the single wheel (1).

4. Controllable single wheel according to claim 1 and 3, characterized in that the connection element (10) is guided through the wheel support (2) and in that the brake disc (12) is arranged at its axially outer end.

5. Controllable single wheel according to claim 1, characterized in that the connection element (11) is arranged at the side of the external rotor (4) directed away from the single wheel (1).

6. Controllable single wheel according to one of claims 1 to 5, characterized in that the external rotor motor (3) is designed as a converter-supplied asynchronous motor, the external rotor (4) of which has a laminated rotor core.

7. Controllable single wheel according to one of claims 1 to 5, characterized in that the external rotor motor (3) is designed as a synchronous motor, the external rotor of which has permanent magnets distributed in an annular manner.

8. Rail vehicle, characterized by controllable single wheels (1) according to one of claims 1 to 7.

## Revendications

1. Roue (1) indépendante orientable comportant un dispositif d'entraînement direct à moteur électrique, la roue (1) indépendante étant montée sur un support de roue (2) pouvant basculer au moins horizontalement, et il est prévu, comme dispositif d'entraînement direct, un moteur à induit extérieur (3) disposé axialement à côté de la roue (1) indépendante et dont le paquet de tôles statoriques (5) est monté de manière à être bloqué en rotation et de manière à pouvoir basculer avec le support de roue (2) et dont l'induit extérieur (4) est relié directement à la roue (1) indépendante, caractérisée en ce
que le support (6) portant le paquet de tôles statorique (5) est monté dans l'induit extérieur (3), que pour le maintien avec blocage en rotation du paquet de tôles statoriques (5), il est prévu un dispositif d'appui de couple (7,8), dont un côté est fixé au paquet de tôles statoriques (5) et dont l'autre côté est fixé au châssis, au véhicule ou au support de roue (2) et qu'un disque de frein (12) est fixé rigidement à l'induit extérieur (4) à l'aide d'un élément de liaison (10,11).

2. Roue indépendante orientable selon la revendication 1, caractérisée en ce que le système d'appui de couple (7) est fixé par l'intermédiaire d'une articulation sphérique au châssis ou au véhicule.

3. Roue indépendante orientable selon la revendication 1, caractérisée en ce que l'élément de liaison (10) est monté du côté, de l'induit extérieur (4), qui est, tourné vers la roue indépendante (1).

4. Roue indépendante orientable selon la revendication 1 ou 3, caractérisée en ce que l'élément de liaison (10) traverse le support de roue (2) et que le disque de frein (12) est disposé à l'extrémité extérieure, du point de vue axial, de cet élément.

5. Roue indépendante orientable selon la revendication 1, caractérisée par le fait que l'élément de liaison (11) est disposé du côté, tourné à l'opposé de la roue (1) indépendante, de l'induit extérieur (4).

6. Roue indépendante orientable selon l'une des revendications 1 à 5, caractérisée en ce que le moteur (3) à induit extérieur est réalisé sous la forme d'un moteur asynchrone alimenté par un convertisseur et dont l'induit extérieur (4) comporte un paquet de tôles rotoriques.

7. Roue indépendante orientable selon l'une des revendications 1-5, caractérisée en ce que le moteur (3) à induit extérieur est agencé sous la forme d'un moteur synchrone dont l'induit extérieur possède des aimants permanents répartis de façon annulaire.

8. Véhicule sur rails, caractérisé par des roues (1) indépendantes orientables selon l'une des revendications 1 à 7.
